# EUROPEAN PATENT SPECIFICATION

(11) **EP 3 896 222 B1**
(45) Date of publication and mention of the grant of the patent: **09.04.2025**
(21) Application number: 20397505.7
(22) Date of filing: 16.04.2020
(51) Int. Cl.: D21H 27/30, D21H 11/10, D21H 11/08, D21H 11/14, D21H 27/10

(54) **A MULTILAYERED FIBROUS SHEET, A METHOD FOR MAKING A MULTILAYERED FIBROUS SHEET, AND USE OF MECHANICAL PULP**
MEHRSCHICHTIGE FASERSTOFFBAHN, VERFAHREN ZUR HERSTELLUNG EINER MEHRSCHICHTIGEN FASERSTOFFBAHN UND VERWENDUNG VON MECHANISCHEM ZELLSTOFF
FEUILLE FIBREUSE MULTICOUCHES, PROCÉDÉ DE FABRICATION D'UNE FEUILLE FIBREUSE MULTICOUCHES ET UTILISATION DE PÂTE MÉCANIQUE

(43) Date of publication of application: 20.10.2021
(73) Proprietor: Metsä Board Oyj, 02020 Metsä (FI)
(72) Inventor: RYTKÖNEN, Ari Pekka, 44101 Äänekoski (FI); PEKURI, Esko, 44101 Äänekoski (FI)
(74) Representative: Laine IP Oy

(56) References cited:
- WO-A1-2006/084883
- WO-A1-2008/031921
- WO-A1-2014/202841
- WO-A1-2015/087293
- WO-A1-2017/006216
- WO-A1-2020/003129
- US-A- 5 080 758
- US-A- 5 916 417
- US-A1- 2006 102 303

## Description

### FIELD

The invention relates generally to the field of paperboard manufacturing.

### BACKGROUND

In paperboard manufacturing, particularly folding boxboard manufacturing, the bulk of the structure is an important property of the end product. An even more important goal is to increase the stiffness of the thin surface layers which contribute to the strength of the paperboard.

In the field of paperboard manufacturing, there is a need for developing a method for increasing the bulk of the paperboard while maintaining sufficient strength properties.

A further problem to be addressed is how to provide a broader selection of pulps that can serve as raw material.

There is also a need for decreasing fibre costs and energy costs in paperboard manufacturing.

Surprisingly, it has been found that at least a part of these problems can be solved by the present invention.

US 5916417 discloses that stiffness improvements for multi-ply paperboard laid from chemically pulped softwood and hardwood papermaking furnish are obtained by fiber fractionating the softwood pulp and repositioning the resulting fractions. Chemically pulped and preferably bleached softwood fiber rejects of a fractionation screen are redistributed into the outer plies of a three-ply, 300 - 350 g/m basis weight paperboard. The fractionation accepts are repositioned to the center ply for a 12% to 15% increase in Taber stiffness. The short, accept fiber from the fractionation screen is mixed with chemically pulped hardwood fiber or modified mechanical pulp of either species for formation of the center ply on a multiformer paper machine.

WO 2020/003129 A1 relates to a ply of a linerboard for corrugated board, which ply exhibits high strength properties and which enables the production of lightweight linerboards. The ply of the invention comprises 20 - 80 wt-% CTMP from wood fibers and 80 - 20 wt-% chemical pulp, calculated on the total fiber weight of said ply and strength additives chosen from the group of microfibrillated cellulose (MFC), anionic or cationic polymers and starch or combinations thereof. The ply exhibits a geometric SCT index of above 22 Nm/g and a density of below 680 kg/m³, preferably of below 650 kg/m³.

### SUMMARY OF THE INVENTION

The invention is defined by the features of the independent claims. Some specific embodiments are defined in the dependent claims.

According to a first aspect of the present invention, there is provided a multilayered fibrous sheet, such as paperboard, having a first layer comprising a first fibrous material, a second layer, spaced apart from the first layer, comprising a second fibrous material, and a third layer between the first and the second layers, comprising a third fibrous material, wherein at least one of the first and the second fibrous materials comprises or consists of a mixture of chemical pulp and mechanical pulp; and the third fibrous material comprises or consists of mechanical pulp.

Various embodiments of the first aspect may comprise at least one feature from the following bulleted list:
- In said at least one of the first and second fibrous materials the proportion of mechanical pulp amounts to at least 5%, preferably 5 to 20%, for example 5 to 15%, by weight of said fibrous material.
- The chemical pulp is bleached chemical pulp, in particular bleached kraft pulp, and comprises softwood, such as spruce or pine or mixtures thereof, or hardwood, such as birch, poplar, aspen, alder, maple, eucalypt tropical hardwood, or mixtures thereof, or it comprises or consists of a mixture of softwood and hardwood chemical pulp.
- The first and the second fibrous materials comprise softwood chemical pulp and hardwood chemical pulp in a ratio in the range 0/100 to 50/50, such as 5/95 to 30/70.
- The first and the second fibrous materials comprise softwood chemical pulp and hardwood chemical pulp in a ratio that is smaller than 30/70.
- Said softwood chemical pulp is bleached softwood chemical pulp and said hardwood chemical pulp is bleached hardwood chemical pulp.
- The mechanical pulp of said at least one of the first and the second fibrous materials comprises or consists of bleached chemi-thermomechanical pulp, produced from hardwood or softwood or combinations thereof, for example from birch or pine or a combination thereof.
- The mechanical pulp of the third fibrous material is selected from the following: BCTMP, ground wood and combinations thereof.
- The third fibrous material comprises a mixture of mechanical pulp and broke fibers.
- The sheet is a calendered paperboard.
- The sheet is folding boxboard.
- The first layer forms the front (in use) layer and the second layer forms the back (in use) layer of the sheet.
- The first layer contains bleached mechanical pulp, such as BCTMP, whereas the second layer is free from mechanical pulp.

According to a second aspect of the present invention, there is provided a method for making a multilayered fibrous sheet comprising a first layer comprising a first fibrous material, a second layer, spaced apart from the first layer, comprising a second fibrous material, and a third layer between the first and the second layers, comprising a third fibrous material; the method comprising the steps of: providing a first layer mixture comprising chemical pulp, for forming said first layer; providing a second layer mixture comprising chemical pulp, for forming said second layer; providing a third layer mixture comprising mechanical pulp, for forming said third layer; adding mechanical pulp to at least one of the first layer and second layer mixtures; forming the multilayered fibrous sheet by using said first, second and third layer mixtures for forming said first, second and third layers, respectively.

Various embodiments of the second aspect may comprise at least one feature from the following bulleted list:
- The method comprises adding bleached chemi-thermomechanical pulp to at least one of the first and second layer mixtures in an amount of at least 5% by weight of the fiber mass in said mixture.
- The method comprises refining of the first layer mixture and/or refining of the second layer mixture either after or before said adding of mechanical pulp.
- The mechanical pulp of said at least one of the first layer and second layer mixtures is BCTMP and said refining is carried out before adding the BCTMP.
- The method comprises steps of: adding softwood chemical pulp and hardwood chemical pulp in a ratio in the range of 0/100 to 30/70 to form the first layer mixture; adding softwood chemical pulp and hardwood chemical pulp in a ratio in the range of 30/70 to 50/50 to form the second layer mixture.
- Said chemical pulp of the first layer mixture consists of hardwood chemical pulp.
- The first layer mixture and the second layer mixture are refined at an energy consumption of more than 55 kWh/t.

According to a third aspect of the present invention, there is provided use of mechanical pulp in combination with chemical pulp for a fibrous material of a surface layer or surface layers of a multi-layered fibrous sheet, such as paperboard.

Various embodiments of the third aspect may comprise at least one feature from the following bulleted list:
- The mechanical pulp is BCTMP, and the multi-layered fibrous sheet is folding boxboard.
- The surface layer or the surface layers are the front layer and/or the back layer of folding boxboard, and in said surface layer the proportion of mechanical pulp amounts to at least 5% by weight of the total fiber mass in said surface layer.

The present invention provides considerable advantages. The bulk of the paperboard, particularly the bulk of surface layers, is increased without disturbing bending strength properties.

The present invention makes it possible to improve the stiffness of the paperboard.

The present invention is cost-effective and still capable of maintaining the binding strength within the layers at a high level.

The present invention makes it possible to decrease the energy costs related to drying of the pulp during the paperboard manufacturing process. The advantages of the invention are particularly apparent in the production of cartonboard or containerboard, such as folding boxboard or linerboard.

Some embodiments of the invention enable use of cheaper raw materials.

Next embodiments will be examined in more detail.

### BRIEF DESCRIPTION OF THE DRAWINGS

FIGURE 1 shows a graph depicting tensile stiffness (GEOM) as a function of thickness for the structures prepared in Example 1;
FIGURE 2 shows a graph depicting bending stiffness (CD) as a function of bending stiffness (MD) for the structures prepared in Example 1;
FIGURE 3 shows a graph depicting brightness of the top layer as a function of brightness of the bottom layer, as measured for a single sheet, for the structures prepared in Example 1;
FIGURE 4 shows a graph depicting modulus of elasticity as a function of CSF for the structures prepared in Example 1;
FIGURE 5 shows a graph depicting WRV as a function of CSF for the structures prepared in Example 1;
FIGURE 6 shows a graph depicting Scott Bond as a function of bulk for the structures prepared in Example 1; and
FIGURE 7 shows graphically the cost of fiber mass, filler and refining energy incurred during manufacturing of the structures prepared in Example 1.

### EMBODIMENTS

### DEFINITIONS

In the present context, the term "paperboard" is to be understood to designate a fibrous web which can be used as such as a board, typically having a grammage in the range indicated below, or which can be used as a part of a board or a converted board. The board or converted board can be uncoated or coated.

"Grammage" indicates how many grams one square meter weighs. The grammage of paperboard is typically from 90 to 600 g/m².

"Bulk" expresses the specific volume of a material. Bulk is the inverse of density.

By means of the present invention it is possible to produce paperboards having improved combined properties of bulk and strength compared to conventional paperboards.

Surprisingly, it has been observed that it is possible to improve the bending stiffness of the paperboard via increasing the bulk of the surface layers. In embodiments of the present method, the modulus of elasticity of the surface layers is not compromised.

The product according to the invention is a multilayered fibrous sheet, such as paperboard.

In one embodiment, the product according to the invention comprises a first layer comprising a first fibrous material, a second layer, spaced apart from the first layer, comprising a second fibrous material, and a third layer (middle layer) between the first and the second layers, comprising a third fibrous material.

In one embodiment, the first layer forms the front (top) layer and the second layer forms the back (bottom) layer of the sheet.

In preferred embodiments, at least one of the first and the second fibrous materials, or both, consists of a mixture of chemical pulp and mechanical pulp. Preferably said mechanical pulp is bleached mechanical pulp, such as BCTMP.

In preferred embodiments, the proportion of the mechanical pulp amounts to at least 5% by weight of said fibrous material. In one embodiment, the proportion of the mechanical pulp amounts to 20% or less, for example 5 to 15%, by weight of said fibrous material.

In some embodiments, the method for making a multilayered fibrous sheet comprises the steps of providing a front layer mixture comprising chemical pulp, providing a back layer mixture comprising chemical pulp, refining of the surface layer mixture and the back layer mixture, and adding mechanical pulp to at least one of the mixtures.

The front layer mixture to which mechanical pulp is to be added is preferably a mixture comprising softwood chemical pulp and hardwood chemical pulp in a ratio 5/95 to 30/70.

In one embodiment, the front layer mixture to which mechanical pulp is to be added is a mixture comprising softwood chemical pulp and hardwood chemical pulp in a ratio in the range 0/100 to 50/50, such as 5/95 to 30/70. Preferably the ratio is smaller than 30/70.

In one embodiment, the front layer mixture to which mechanical pulp is to be added consists of hardwood chemical pulp, preferably birch pulp. Hardwood pulp, particularly birch pulp, comprises short and stiff fibres which provide good light-scattering capability and opacity.

The front layer covers and preferably conceals the middle layer, which typically is darker in colour.

In some embodiments, the front layer comprises a porous structure to improve printability of the paperboard. Therefore, use of hardwood chemical pulp, particularly birch chemical pulp, in the front layer is advantageous.

The back layer mixture to which mechanical pulp is to be added is preferably a mixture comprising softwood chemical pulp and hardwood chemical pulp in a ratio in the range of 30/70 to 50/50. In the back layer, opacity or printability is typically not an important property. Therefore more softwood pulp may be used in the back layer. Additionally, the back layer is typically more light-weight than the front layer. By means of using larger amounts of softwood pulp, such as pine pulp, in the back layer, sufficient strength may be achieved.

In one embodiment, the back layer mixture to which mechanical pulp is to be added comprises more softwood pulp than the front layer mixture to which mechanical pulp is to be added. For example, the back layer mixture may comprise 30 to 50 % softwood pulp, and the front layer mixture may comprise 0 to 30 % softwood pulp.

It is advantageous to add mechanical pulp to the front layer mixture only, because optimization of strength is easier in that case. Further, the front layer is typically covered by a coating layer comprising pigments. Such a pigment coating effectively conceals the front layer. Therefore it is possible to add mechanical pulp, which is darker and coarser than chemical pulp, to the front layer.

In some embodiments, it is advantageous to add mechanical pulp to both the front layer mixture and to the back layer mixture in order to achieve larger cost savings. In this embodiment it is possible to optimize costs and the back layer thickness and to obtain either higher back layer thickness with similar cost level or alternatively reduced costs with the same back layer thickness.

In one embodiment, the first layer contains bleached mechanical pulp, such as BCTMP, whereas the second layer is free from bleached mechanical pulp.

In one embodiment the front layer mixture and the back layer mixture are both refined at an energy consumption of more than 55 kWh/t, such as more than 65 kWh/t. In one embodiment, the energy consumption in refining is less than 100 kWh/t.

In some embodiments, the front layer mixture and/or the back layer mixture are refined at an energy consumption of less than 100 kWh/t.

The chemical pulp in the first and second layers is preferably bleached chemical pulp, in particular bleached kraft pulp.

The chemical pulp in the first and second layers preferably comprises softwood, such as spruce or pine or mixtures thereof, or hardwood, such as birch, poplar, aspen, alder, maple, eucalypt tropical hardwood, or mixtures thereof, or it comprises a mixture of softwood and hardwood chemical pulp.

In some embodiments, the first and the second fibrous materials comprise 5 to 95 percent, in particular 10 to 90 percent, bleached hardwood chemical pulp and 95 to 5 percent, in particular 90 to 10 percent bleached softwood chemical pulp, calculated from the weight of the chemical pulp in respective material.

In some embodiments, the first fibrous material comprises 10 to 40 percent softwood chemical pulp and 60 to 90 percent hardwood chemical pulp, and the second fibrous material comprises 40 to 60 percent softwood chemical pulp and 60 to 40 percent hardwood chemical pulp, said percentages being calculated from the weight of the chemical pulp in respective material.

Preferably the first and optionally the second fibrous material contains up to 20%, for example 5 to 20% mechanical pulp, such as bleached mechanical pulp, by weight of said fibrous material.

The bleached mechanical pulp may be bleached chemi-thermomechanical pulp, produced from hardwood or softwood or combinations thereof, for example from birch or pine or a combination thereof.

Typically, the third fibrous material comprises mechanical pulp.

In some embodiments, the third fibrous material comprises broke. Preferably the third fibrous material comprises 10 to 30 % broke. In one embodiment, at least 25 % of the broke in the third fibrous material is chemical pulp.

The third fibrous material preferably comprises a mixture of mechanical pulp and broke fibers.

The use of broke in the third fibrous material is highly advantageous, because broke comprises additives and binders, which increases the strength of the paperboard end-product.

Examples of suitable types of broke include: trimming broke, machine reel change broke. Machine broke, which in uncoated, is preferred as it does not contain any pigment coating agents. Pigment coating agents are not capable of forming bonds with fibres.

Preferably, the mechanical pulp of the third fibrous material is selected from the following group: ground wood (GW), pressure ground wood (PGW), thermomechanical pulp (TMP), chemithermomechanical pulp (CTMP), bleached chemithermomechanical pulp (BCTMP), semichemical pulp, and combinations thereof.

Preferably, the mechanical pulp of the third fibrous material comprises or consists of ground wood (GW) and/or bleached chemithermomechanical pulp (BCTMP), most preferably BCTMP.

In some embodiments, the sheet is a calendered paper board.

In some embodiments, the sheet is folding box board.

In one embodiment, the Scott bond of the paperboard is at least 90 J/m².

In one embodiment, the bulk of the paperboard is at least 1.65 cm³/g, for example at least 1.75 cm³/g.

In one embodiment, the thickness of the paperboard is in the range of 350 to 650 µm.

In some embodiments, the thickness of each of the surface layers is at least 5% of the thickness of the multi-layered fibrous sheet in order to provide a sufficient modulus of elasticity in the end product.

In one embodiment, the grammage of the paperboard is in the range of 200 to 340 g/m².

In one embodiment, the paperboard is for use in or as a folding boxboard.

The present invention is capable of providing several advantages as described in the following.

Improvement of Scott Bond in combination with the bulk of the end product can be realized. Scott Bond and bulk are particularly important parameters in the characterization of folding boxboard.

The increase of bulk makes it possible achieve the same level of bending stiffness in cross direction (CD) with a lighter board. The cross direction is typically the vertical direction. The compression strength of the end product can be increased.

The present invention provides a good balance in decreasing undesired delamination effects and in increasing bending stiffness.

By means of the present invention the distance between the surface layers can be increased.

By means of the present invention the amount of fibers and correspondingly the amount of bonds between the fibers is decreased in the surface layers and a more porous structure is obtained. A decrease of Scott Bond is advantageously avoided by increased refining of the surface layer mixtures.

Mechanical pulp (BCTMP) is typically darker (more yellowish) than chemical pulp. However, we have observed that the product of the present invention is capable of maintaining its brightness despite the addition of mechanical pulp, because light scattering increases due to the presence of fines of the mechanical pulp.

### Example 1

In the experiments, the amount of BCTMP added to the surface layers was varied from 0 to 20%. BCTMP was added either only to the top layer, or alternatively to both the top layer and the bottom layer. The characteristics of the BCTMP are given in Table 1. The applied refining power values are shown in Table 2.

**Table 1. Characteristics of BCTMP.**

| | Standard | | Target | Min/Max |
|---|---|---|---|---|
| Raw materials | | hardwood | 60 to 90 | |
| | | softwood | 10 to 40 | |
| CSF | ISO 5267-2 | ml | 300 | ± 30 |
| Brightness 457 run | ISO 2470 | % ISO | 82 | ± 5 |
| Shive content | "Pulmac (0.1 mm)" | % | < 0.3 | |
| Tensile index | ISO 5270/1924-2 | | 38 | ? |

**Table 2. Refining power values.**

| Sample | Refining, top layer (kWh/t) | Refining, bottom layer (kWh/t) |
|---|---|---|
| Reference (BCTMP 0%) | 61 | 48 |
| BCTMP 5% in bottom layer | 61 | 57 |
| BCTMP 10% in bottom layer | 61 | 70 |
| BCTMP 20% in bottom layer | 61 | 70 |
| BCTMP 5% in top and bottom layers | 70 | 57 |
| BCTMP 10% in top and bottom layers | 70 | 70 |
| BCTMP 20% in top and bottom layers | 70 | 70 |

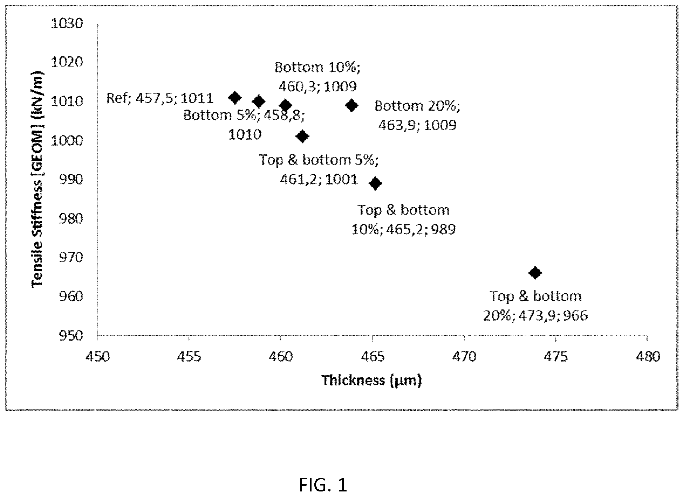

FIGURE 1 shows a graph depicting tensile stiffness (GEOM) as a function of thickness for the structures prepared in Example 1. Refining of the chemical pulp was slightly increased when incorporating BCTMP.

Weaker bonding can be compensated effectively in this way, even though the thickness of the product slightly increases. The BCTMP addition affects the tensile stiffness of the top layer to a larger extent than that of the bottom layer.

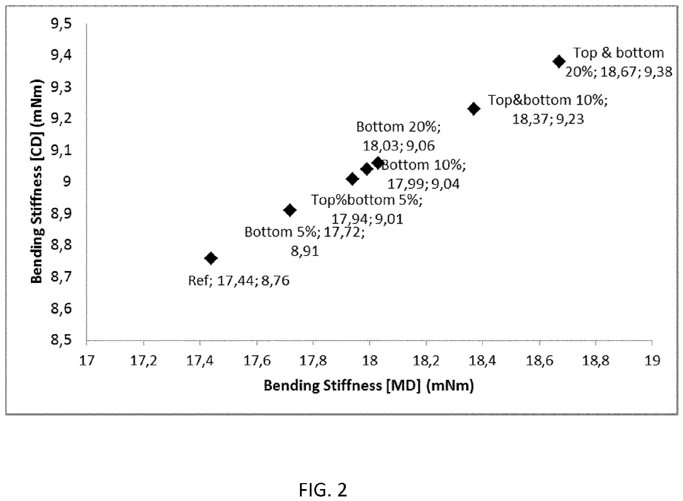

FIGURE 2 shows a graph depicting bending stiffness (CD) as a function of bending stiffness (MD) for the structures prepared in Example 1. It was observed that incorporation of BCTMP in combination with slightly increased refining improves the bending stiffness of the end product as a result of increased bulk and increased refining of the surface layers.

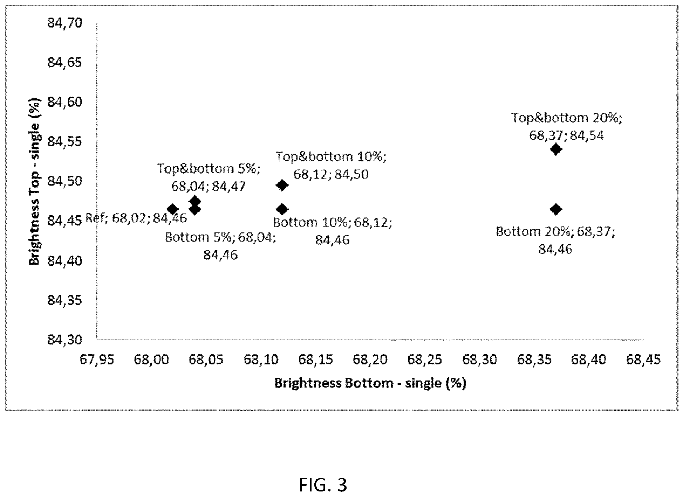

FIGURE 3 shows a graph depicting brightness of the top layer as a function of brightness of the bottom layer, as measured for a single sheet, for the structures prepared in Example 1. The use of BCTMP in the surface layers has only small effects on the brightness of the product. Even though the brightness of BCTMP is lower than that of refined chemical pulp, the higher light scattering property of BCTMP compensates this. Thus, the darker middle layer can be covered more effectively.

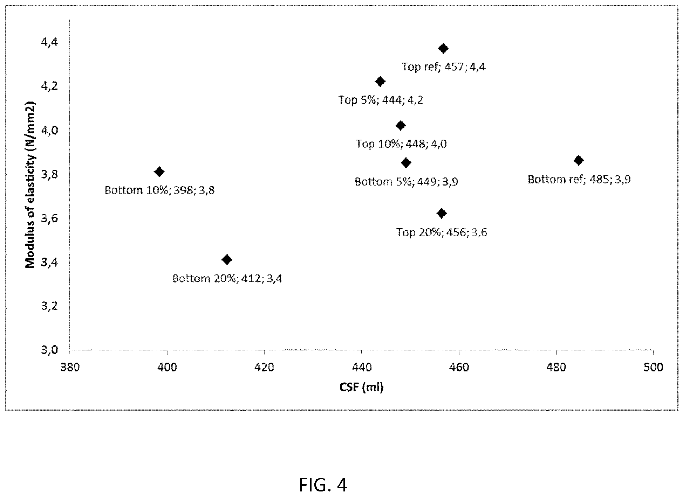

FIGURE 4 shows a graph depicting modulus of elasticity as a function of CSF for the structures prepared in Example 1. CSF targets need to be relieved to some extent when increasing refining of the pulp. In these experiments, similar refining (specific energy consumption 70 kWh/t) was applied to the structures comprising 10% and 20% BCTMP, which is reflected in the results.

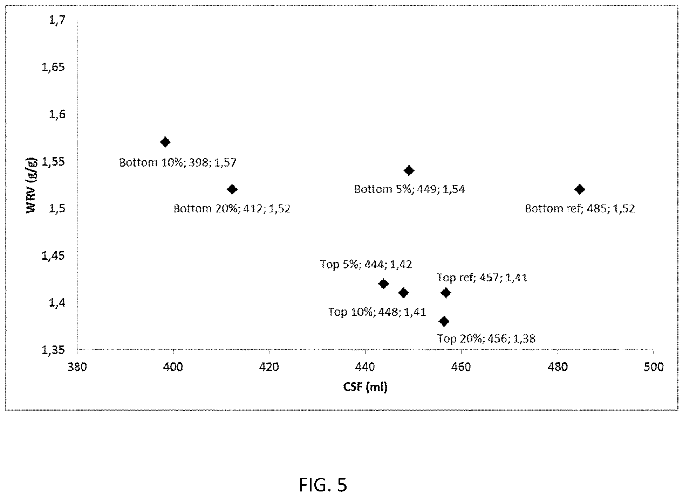

FIGURE 5 shows a graph depicting WRV (Water Retention Value) as a function of CSF (Canadian Standard Freeness) for the structures prepared in Example 1. When refining is increased, the water retention value (WRV) of the chemical pulp layers (surface layers) increases.

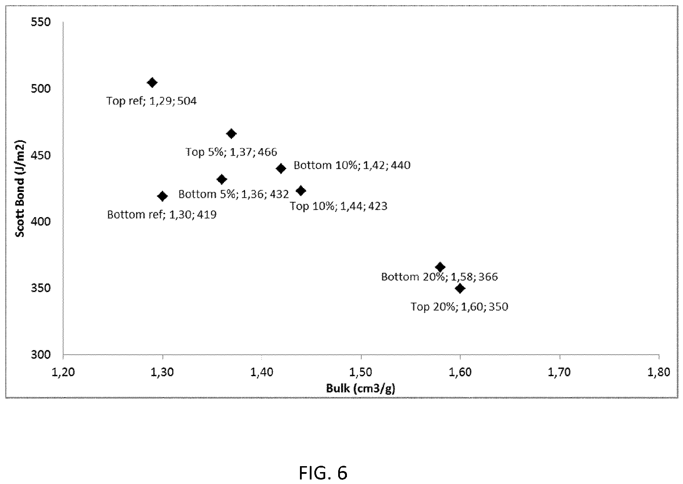

FIGURE 6 shows a graph depicting Scott Bond as a function of bulk for the structures prepared in Example 1. In principle the incorporation of BCTMP might weaken the bonding between fibers (Scott Bond). However, it was observed that a sufficiently high Scott Bond level can be maintained by slightly increasing refining of the fiber mass. Optimization of the amount of BCTMP in the surface layers in relation to the extent of refining provides a good bulk level.

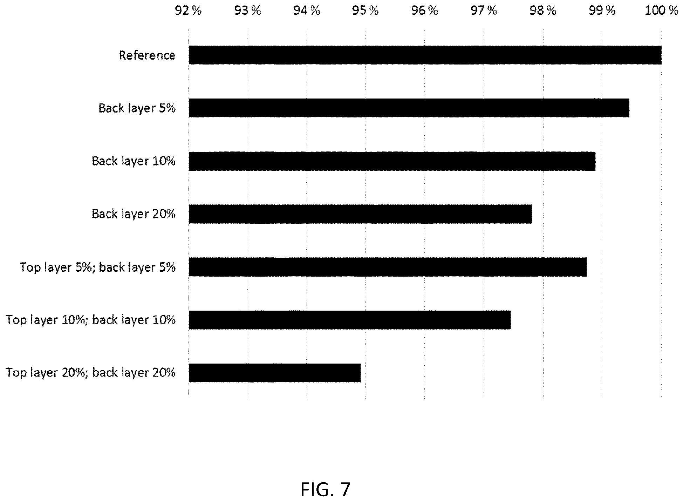

FIGURE 7 shows graphically the relative cost of fiber mass incurred during manufacturing of the structures prepared in Example 1.

It can be concluded that by incorporating BCTMP in the surface layers the fiber costs decreased significantly.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

### INDUSTRIAL APPLICABILITY

The present invention is industrially applicable at least in manufacturing of multilayered paperboard structures.

### ACRONYMS LIST

- BCTMP: bleached chemithermomechanical pulp
- GW: ground wood
- SW: softwood
- HW: hardwood
- MD: machine direction
- CD: cross direction
- CSF: Canadian Standard Freeness
- WRV: Water Retention Value

## Claims

1. A multilayered fibrous sheet, such as paperboard, having
- a first layer comprising a first fibrous material,
- a second layer, spaced apart from the first layer, comprising a second fibrous material, and
- a third layer between the first and the second layers, comprising a third fibrous material,
wherein
- at least one of the first and the second fibrous materials comprises or consists of a mixture of chemical pulp and mechanical pulp; and
- the third fibrous material comprises or consists of mechanical pulp,
wherein in said at least one of the first and the second layer fibrous materials the proportion of mechanical pulp amounts to at least 5% by weight of said fibrous material, wherein both of the first and the second fibrous materials comprise mechanical pulp, and wherein the sheet is folding boxboard.

2. The multilayered fibrous sheet according to claim 1, wherein in said at least one of the first and the second fibrous materials the proportion of mechanical pulp amounts to 5 to 20%, for example 5 to 15%, by weight of said fibrous material.

3. The multilayered fibrous sheet according to claim 1 or claim 2, wherein the chemical pulp is bleached chemical pulp, in particular bleached kraft pulp, and comprises softwood, such as spruce or pine or mixtures thereof, or hardwood, such as birch, poplar, aspen, alder, maple, eucalypt tropical hardwood, or mixtures thereof, or it comprises or consists of a mixture of softwood and hardwood chemical pulp.

4. The multilayered fibrous sheet according to any of claims 1 to 3, wherein the first and the second fibrous materials comprise softwood chemical pulp and hardwood chemical pulp in a ratio in the range 0/100 to 50/50, such as 5/95 to 30/70.

5. The multilayered fibrous sheet according to any of claims 1 to 4, wherein the first and the second fibrous materials comprise softwood chemical pulp and hardwood chemical pulp in a ratio that is smaller than 30/70, and wherein said softwood chemical pulp is bleached softwood chemical pulp and said hardwood chemical pulp is bleached hardwood chemical pulp.

6. The multilayered fibrous sheet according to any of the preceding claims, wherein the mechanical pulp of said at least one of the first and the second fibrous materials comprises or consists of bleached chemi-thermomechanical pulp, produced from hardwood or softwood or combinations thereof, for example from birch or pine or a combination thereof.

7. The multilayered fibrous sheet according to any of the preceding claims, wherein the mechanical pulp of the third fibrous material is selected from the following: BCTMP, ground wood and combinations thereof.

8. The multilayered fibrous sheet according any of the preceding claims, wherein the third fibrous material comprises a mixture of mechanical pulp and broke fibers.

9. The multilayered fibrous sheet according to any of the preceding claims, wherein the first layer forms the front layer and the second layer forms the back layer of the sheet.

10. A method for making a multilayered fibrous sheet comprising a first layer comprising a first fibrous material, a second layer, spaced apart from the first layer, comprising a second fibrous material, and a third layer between the first and the second layers, comprising a third fibrous material;
the method comprising the steps of:
- providing a first layer mixture comprising chemical pulp, for forming said first layer;
- providing a second layer mixture comprising chemical pulp, for forming said second layer;
- providing a third layer mixture comprising mechanical pulp, for forming said third layer;
- adding mechanical pulp to at least one of the first layer and second layer mixtures;
- forming the multilayered fibrous sheet by using said first, second and third layer mixtures for forming said first, second and third layers, respectively,
the method further comprising:
adding mechanical pulp to both of the first and the second layer mixtures, and
adding mechanical pulp to at least one of the first and the second layer mixtures in an amount of at least 5% by weight of the fiber mass in said mixture;
wherein the sheet is folding boxboard.

11. The method according to claim 10, comprising adding bleached chemi-thermomechanical pulp to at least one of the first and the second layer mixtures in an amount of at least 5% by weight of the fiber mass in said mixture.

12. The method according to claim 10 or claim 11, comprising refining of the first layer mixture and/or refining of the second layer mixture either after or before said adding of mechanical pulp; preferably the mechanical pulp of said at least one of the first layer and second layer mixtures is BCTMP and said refining is carried out before adding the BCTMP.

13. The method according to any of claims 10 to 12, comprising steps of:
- adding softwood chemical pulp and hardwood chemical pulp in a ratio in the range of 0/100 to 30/70 to form the first layer mixture,
- adding softwood chemical pulp and hardwood chemical pulp in a ratio in the range of 30/70 to 50/50 to form the second layer mixture.

14. The method according to any of claims 10 to 13, wherein said chemical pulp of the first layer mixture consists of hardwood chemical pulp.

15. The method according to any of claims 10 to 14, wherein the first layer mixture and the second layer mixture are refined at an energy consumption of more than 55 kWh/t.

16. Use of mechanical pulp in combination with chemical pulp for a fibrous material of surface layers of a multi-layered fibrous sheet, such as paperboard,
wherein the surface layers are the front layer and the back layer of folding boxboard, and
wherein in at least one of the surface layers the proportion of mechanical pulp amounts to at least 5% by weight of the total fiber mass in said surface layers.

17. The use according to claim 16, wherein the mechanical pulp is BCTMP, and the multi-layered fibrous sheet is folding boxboard.

## Patentansprüche

1. Mehrschichtiger Faserbogen, wie Pappe, aufweisend
- eine erste Schicht, die ein erstes Fasermaterial umfasst,
- eine zweite Schicht, von der ersten Schicht beabstandet, die ein zweites Fasermaterial umfasst, und
- eine dritte Schicht zwischen der ersten und der zweiten Schicht, die ein drittes Fasermaterial umfasst,
wobei
- mindestens eines des ersten und des zweiten Fasermaterials eine Mischung aus Zellstoff und Holzstoff umfasst oder daraus besteht; und
- das dritte Fasermaterial Holzstoff umfasst oder darauf besteht,
wobei in der mindestens einen der ersten und der zweiten Faserstoffschicht der Anteil an Holzstoff mindestens 5 Gew.-% des Fasermaterials beträgt, wobei sowohl das erste als auch das zweite Fasermaterial Holzstoff umfassen und wobei der Bogen Faltschachtelkarton ist.

2. Mehrschichtiger Faserbogen nach Anspruch 1, wobei in dem mindestens einen des ersten und des zweiten Fasermaterials der Anteil an Holzstoff 5 bis 20 Gew.-%, zum Beispiel 5 bis 15 Gew.-% des Fasermaterials beträgt.

3. Mehrschichtiger Faserbogen nach Anspruch 1 oder Anspruch 2, wobei der Zellstoff gebleichter Zellstoff, insbesondere gebleichter Kraftzellstoff ist und Weichholz, wie Fichte oder Kiefer oder Mischungen davon, oder Hartholz, wie Birke, Pappel, Espe, Erle, Ahorn, Eukalyptus, tropisches Hartholz oder Mischungen davon umfasst, oder ein Gemisch aus Weichholz- und Hartholzzellstoff umfasst oder daraus besteht.

4. Mehrschichtiger Faserbogen nach einem der Ansprüche 1 bis 3, wobei das erste und das zweite Fasermaterial Weichholzzellstoff und Hartholzzellstoff in einem Verhältnis im Bereich von 0/100 bis 50/50, wie 5/95 bis 30/70 umfassen.

5. Mehrschichtiger Faserbogen nach einem der Ansprüche 1 bis 4, wobei das erste und das zweite Fasermaterial Weichholzzellstoff und Hartholzzellstoff in einem Verhältnis umfassen, das kleiner als 30/70 ist, und wobei der Weichholzzellstoff gebleichter Weichholzzellstoff ist und der Hartholzzellstoff gebleichter Hartholzzellstoff ist.

6. Mehrschichtiger Faserbogen nach einem der vorstehenden Ansprüche, wobei der Holzstoff des mindestens einen des ersten und des zweiten Fasermaterials gebleichten chemo-thermomechanischen Zellstoff umfasst oder daraus besteht, der aus Hartholz oder Weichholz oder Kombinationen davon, beispielsweise aus Birke oder Kiefer oder einer Kombination davon, hergestellt ist.

7. Mehrschichtiger Faserbogen nach einem der vorstehenden Ansprüche, wobei der Holzstoff des dritten Fasermaterials aus dem Folgenden ausgewählt ist: BCTMP, gemahlenes Holz und Kombinationen davon.

8. Mehrschichtiger Faserbogen nach einem der vorstehenden Ansprüche, wobei das dritte Fasermaterial eine Mischung aus Holzstoff und Bruchfasern umfasst.

9. Mehrschichtiger Faserbogen nach einem der vorstehenden Ansprüche, wobei die erste Schicht die Vorderschicht bildet und die zweite Schicht die Rückschicht des Bogens bildet.

10. Verfahren zum Herstellen eines mehrschichtigen Faserbogens, der eine erste Schicht, die ein erstes Fasermaterial umfasst, eine zweite Schicht, von der ersten Schicht beabstandet, die ein zweites Fasermaterial umfasst, und eine dritte Schicht zwischen der ersten und der zweiten Schicht, die ein drittes Fasermaterial umfasst, umfasst;
wobei das Verfahren die Schritte umfasst zum:
- Bereitstellen einer ersten Schichtmischung, die Zellstoff umfasst, zum Bilden der ersten Schicht;
- Bereitstellen einer zweiten Schichtmischung, die Zellstoff umfasst, zum Bilden der zweiten Schicht;
- Bereitstellen einer dritten Schichtmischung, die Holzstoff umfasst, zum Bilden der dritten Schicht;
- Hinzufügen von Holzstoff zu mindestens einer der ersten Schichtmischung und der Zweitschichtmischung;
- Bilden des mehrschichtigen Faserbogens unter Verwendung der ersten, zweiten und dritten Schichtmischung zum Bilden der ersten, zweiten beziehungsweise dritten Schicht,
wobei das Verfahren weiter umfasst:
Hinzufügen von Holzstoff zu sowohl der ersten als auch der zweiten Schichtmischung, und
Hinzufügen von Holzstoff zu mindestens einer der ersten und der zweiten Schichtmischung in einer Menge von mindestens 5 Gew.-% der Fasermasse in der Mischung;
wobei der Bogen Faltschachtelkarton ist.

11. Verfahren nach Anspruch 10, umfassend das Hinzufügen von gebleichtem chemo-thermomechanischen Zellstoff zu mindestens einer der ersten und der zweiten Schichtmischung in einer Menge von mindestens 5 Gew.-% der Fasermasse in der Mischung.

12. Verfahren nach Anspruch 10 oder Anspruch 11, umfassend das Raffinieren der ersten Schichtmischung und/oder Raffinieren der zweiten Schichtmischung entweder nach oder vor dem Hinzufügen des Holzstoffs; wobei der Holzstoff der ersten Schichtmischung und/oder der zweiten Schichtmischung vorzugsweise BCTMP ist und das Raffinieren wird vor Hinzufügen des BCTMP durchgeführt wird.

13. Verfahren nach einem der Ansprüche 10 bis 12, das weiter die folgenden Schritte umfasst:
- Hinzufügen von Weichholzzellstoff und Hartholzzellstoff in einem Verhältnis im Bereich von 0/100 bis 30/70, um die erste Schichtmischung zu bilden,
- Hinzufügen von Weichholzzellstoff und Hartholzzellstoff in einem Verhältnis im Bereich von 30/70 bis 50/50, um die zweite Schichtmischung zu bilden,

14. Verfahren nach einem der Ansprüche 10 bis 13, wobei der Zellstoff der ersten Schichtmischung aus Hartholzzellstoff besteht.

15. Verfahren nach einem der Ansprüche 10 bis 14, wobei die erste Schichtmischung und die zweite Schichtmischung bei einem Energieverbrauch von mehr als 55 kWh/t raffiniert werden.

16. Verwendung von Holzstoff in Kombination mit Zellstoff für ein Fasermaterial von Oberflächenschichten eines mehrschichtigen Faserbogens, wie Pappe,
wobei die Oberflächenschichten die Vorderschicht und die Rückschicht von Faltschachtelkarton sind, und
wobei in mindestens einer der Oberflächenschichten der Anteil an Holzstoff mindestens 5 Gew.-% der gesamten Fasermasse in den Oberflächenschichten beträgt.

17. Verwendung nach Anspruch 16, wobei der Holzstoff BCTMP ist und der mehrschichtige Faserbogen Faltschachtelkarton ist.

## Revendications

1. Feuille fibreuse multicouche, telle que du carton, présentant
- une première couche comprenant un premier matériau fibreux,
- une deuxième couche, espacée de la première couche, comprenant un deuxième matériau fibreux, et
- une troisième couche entre les première et deuxième couches, comprenant un troisième matériau fibreux,
dans laquelle
- au moins l'un des premier et deuxième matériaux fibreux comprend ou consiste en un mélange de pâte chimique et de pâte mécanique ; et
- le troisième matériau fibreux comprend ou consiste en de la pâte mécanique,
dans laquelle dans ledit au moins un des premier et deuxième matériaux fibreux de couche, la proportion de pâte mécanique s'élève à au moins 5 % en poids dudit matériau fibreux, dans laquelle à la fois les premier et deuxième matériaux fibreux comprennent de la pâte mécanique, et dans laquelle la feuille est du carton pour boîtes pliantes.

2. Feuille fibreuse multicouche selon la revendication 1, dans laquelle dans ledit au moins un des premier et deuxième matériaux fibreux, la proportion de pâte mécanique s'élève à 5 à 20 %, par exemple 5 à 15 %, en poids dudit matériau fibreux.

3. Feuille fibreuse multicouche selon la revendication 1 ou la revendication 2, dans laquelle la pâte chimique est de la pâte chimique blanchie, en particulier de la pâte kraft blanchie, et comprend du bois tendre, tel que l'épicéa ou le pin ou des mélanges de ceux-ci, ou du bois dur, tel que le bouleau, le peuplier, le tremble, l'aulne, l'érable, l'eucalyptus, du bois dur tropical, ou des mélanges de ceux-ci, ou elle comprend ou consiste en un mélange de pâte chimique de bois tendre et de bois dur.

4. Feuille fibreuse multicouche selon l'une quelconque des revendications 1 à 3, dans laquelle les premier et deuxième matériaux fibreux comprennent de la pâte chimique de bois tendre et de la pâte chimique de bois dur dans un rapport compris dans la plage 0/100 à 50/50, tel que 5/95 à 30/70.

5. Feuille fibreuse multicouche selon l'une quelconque des revendications 1 à 4, dans laquelle les premier et deuxième matériaux fibreux comprennent de la pâte chimique de bois tendre et de la pâte chimique de bois dur dans un rapport qui est inférieur à 30/70, et dans laquelle ladite pâte chimique de bois tendre est de la pâte chimique de bois tendre blanchie et ladite pâte chimique de bois dur est de la pâte chimique de bois dur blanchie.

6. Feuille fibreuse multicouche selon l'une quelconque des revendications précédentes, dans laquelle la pâte mécanique dudit au moins un des premier et deuxième matériaux fibreux comprend ou consiste en de la pâte chimico-thermomécanique blanchie, produite à partir de bois dur ou de bois tendre ou de combinaisons de ceux-ci, par exemple à partir de bouleau ou de pin ou d'une combinaison de ceux-ci.

7. Feuille fibreuse multicouche selon l'une quelconque des revendications précédentes, dans laquelle la pâte mécanique du troisième matériau fibreux est choisie parmi les éléments suivants : de la BCTMP, du bois broyé et des combinaisons de ceux-ci.

8. Feuille fibreuse multicouche selon l'une quelconque des revendications précédentes, dans laquelle le troisième matériau fibreux comprend un mélange de pâte mécanique et de fibres cassées.

9. Feuille fibreuse multicouche selon l'une quelconque des revendications précédentes, dans laquelle la première couche forme la couche avant et la deuxième couche forme la couche arrière de la feuille.

10. Procédé de fabrication d'une feuille fibreuse multicouche comprenant une première couche comprenant un premier matériau fibreux, une deuxième couche, espacée de la première couche, comprenant un deuxième matériau fibreux, et une troisième couche entre les première et deuxième couches, comprenant un troisième matériau fibreux ;
le procédé comprenant les étapes de :
- fourniture d'un mélange de première couche comprenant de la pâte chimique, pour former ladite première couche ;
- fourniture d'un mélange de deuxième couche comprenant de la pâte chimique, pour former ladite deuxième couche ;
- fourniture d'un mélange de troisième couche comprenant de la pâte mécanique, pour former ladite troisième couche ;
- ajout de la pâte mécanique à au moins l'un des mélanges de première couche et de deuxième couche ;
- formation de la feuille fibreuse multicouche en utilisant lesdits mélanges de première, deuxième et troisième couches pour former respectivement lesdites première, deuxième et troisième couches,
le procédé comprenant en outre :
l'ajout de pâte mécanique à la fois aux mélanges de première et deuxième couches, et
l'ajout de pâte mécanique à au moins l'un des mélanges de première et deuxième couches en une quantité d'au moins 5 % en poids de la masse de fibres dans ledit mélange ;
dans lequel la feuille est du carton pour boîtes pliantes.

11. Procédé selon la revendication 10, comprenant l'ajout de pâte chimico-thermomécanique blanchie à au moins l'un des mélanges de première et deuxième couches en une quantité d'au moins 5 % en poids de la masse de fibres dans ledit mélange.

12. Procédé selon la revendication 10 ou la revendication 11, comprenant le raffinage du mélange de première couche et/ou le raffinage du mélange de deuxième couche soit après, soit avant ledit ajout de pâte mécanique ; de préférence, la pâte mécanique dudit au moins un des mélanges de première couche et de deuxième couche est de la BCTMP et ledit raffinage est effectué avant l'ajout de la BCTMP.

13. Procédé selon l'une quelconque des revendications 10 à 12, comprenant les étapes de :
- ajout de la pâte chimique de bois tendre et de la pâte chimique de bois dur dans un rapport compris dans la plage de 0/100 à 30/70 pour former le mélange de première couche,
- ajout de la pâte chimique de bois tendre et de la pâte chimique de bois dur dans un rapport compris dans la plage de 30/70 à 50/50 pour former le mélange de deuxième couche.

14. Procédé selon l'une quelconque des revendications 10 à 13, dans lequel ladite pâte chimique du mélange de première couche consiste en de la pâte chimique de bois dur.

15. Procédé selon l'une quelconque des revendications 10 à 14, dans lequel le mélange de première couche et le mélange de deuxième couche sont raffinés selon une consommation d'énergie supérieure à 55 kWh/t.

16. Utilisation de pâte mécanique en combinaison avec de la pâte chimique pour un matériau fibreux de couches de surface d'une feuille fibreuse multicouche, telle que du carton,
dans laquelle les couches de surface sont la couche avant et la couche arrière du carton pour boîtes pliantes, et
dans laquelle dans au moins une des couches de surface, la proportion de pâte mécanique s'élève à au moins 5 % en poids de la masse totale de fibres dans lesdites couches de surface.

17. Utilisation selon la revendication 16, dans laquelle la pâte mécanique est de la BCTMP et la feuille fibreuse multicouche est du carton pour boîtes pliantes.
